# EUROPEAN PATENT SPECIFICATION

(11) **EP 0 868 560 B1**
(45) Date of publication and mention of the grant of the patent: **14.06.2000**
(21) Application number: 96934616.2
(22) Date of filing: 09.10.1996
(51) Int. Cl.: D21C 5/02

(54) **OFFICE WASTEPAPER DEINKING PROCESS**
VERFAHREN ZUM DEINKEN VON BÜRO-ALTPAPIER
PROCESSUS DE DESENCRAGE DE VIEUX PAPIERS DE BUREAU

(30) Priority: 10.10.1995 US 541376; 10.10.1995 US 541988
(43) Date of publication of application: 07.10.1998
(73) Proprietor: SHELL INTERNATIONALE RESEARCH MAATSCHAPPIJ B.V., 2596 HR Den Haag (NL)
(72) Inventor: BORCHARDT, John, Keith, Houston, TX 77083 (US); BLANCO, Ruth, Javier, Houston, TX 77094 (US)
(86) International application number: EP9604403
(87) International publication number: WO9713917

(56) References cited:
- EP-A- 0 510 954
- US-A- 3 501 373
- US-A- 4 311 552

## Description

This invention relates to a process for the removal of ink from printed office wastepaper in the course of reclaiming the fiber content of the waste for reuse in the manufacture of new paper. More particularly, the invention relates to a process for the deinking of office wastepaper containing xerographically printed paper or paper printed using a laser printer.

Wastepaper has long served as a source of the raw fiber materials used in papermaking. Traditionally, fiber from wastepaper was utilized only in the production of low grade paper and paperboard products. Today, however, greater utilization of reclaimed fiber has provided incentive for taking steps to upgrade the reclaimed product. These steps include treatment to effectively remove ink from waste fibers in order to permit their use in the manufacture of newsprint and high quality papers. Increasing amounts of office waste paper are becoming available. Because of the high quality cellulose fiber in office waste paper, efficient ink removal is particularly desirable since excellent quality, high value products can be prepared from this deinked pulp.

In the course of the conventional paper reclamation process of interest, deinking procedures include steps for converting the wastepaper to pulp and contacting the pulp with an alkaline aqueous deinking medium containing a chemical deinking agent. The physical pulping and the alkalinity of the aqueous medium cause the partial detachment of ink from the cellulose paper fibers and the deinking agent completes this removal and produces an aqueous suspension and/or dispersion of the ink particles thus detached from the paper cellulose fibers. The chemical deinking agent plays an important role in determining the size and geometry of the dispersed ink particles. The resulting mixture is subsequently treated to separate the suspended ink from the pulp.

A variety of materials, particularly surfactants and mixtures of surfactants are known to be useful as deinking agents in such a process, at least when the process is applied to the deinking of such common wastepaper stocks as newsprint, book, magazine and ledger. It is recognized, however, that conventional processes have not been particularly successful in specific application to xerographically printed wastepapers and laser printed wastepapers. The difficulty encountered in the deinking of these wastepapers has been attributed to the character of electrostatic ink, specifically the vehicle, which is fundamentally different from that used in other printing processes. For example, in distinction to the common oil or aqueous vehicles of other inks, the electrostatic ink vehicle is typically a polymeric material (e.g., copolymers of styrene and acrylate monomers, copolymers of styrene and butadiene, and polyester resins) which during the printing process is fixed to the paper by application of heat.

The ever-increasing utilization of xerographic and laser printed paper has made reclamation of office wastepaper containing xerographically and laser printed paper economically attractive. Accordingly, the object of the present invention is a deinking process which is effective in the treatment of office wastepaper stock. As used herein, "office wastepaper" refers to xerographically printed stocks which may contain other materials such as laser printed stocks and ledger stocks.

It is known in the art that the removal of ink from wastepaper can be accomplished by a process in which the paper is reduced to pulp and the pulp is contacted with an aqueous medium containing a surfactant as a deinking agent. For example, it is known from U.S. Patent No. 4,561,933, that xerographically printed wastepaper can be deinked using a mixture of one or more C₅ to C₂₀ alkanols and nonionic surfactant. It is also known in the paper deinking art (for example, U.S. Patent No. 4,162,186) to employ chemical agents which are ethylene oxide adducts ("ethoxylates") of detergent-range alcohols or alkylsubstituted phenols containing an average of about 7 to about 15 oxyethylene units per molecule of alcohol. It is further known from U.S. Patent No. 4,518,459 to use surfactants for deinking which are hydroxy-terminated or benzyl ether-terminated ethylene oxide-propylene oxide adducts (ethoxypropoxylates) of high molecular weight or long chain alcohols.

In EP-A 0 510 954 there is disclosed a deinking process which comprises adding to an aqueous slurry of an electrostatic printed wastepaper a surfactant with a hydrophile/lipophile balance of less than 10. Alcohol ethoxylates are among the surfactants disclosed. Aliphatic petroleum distillates, which are identified as saturated hydrocarbons having carbon numbers in the range of C₉ to C₁₂, may be added as solvents. No effect of such solvents when used in combination with the surfactants is stated or shown.

It has now been found that a combination of one or more ethoxylated detergent-range alcohols and one or more detergent-range olefins is very usefully applied as a deinking agent in process for the deinking of office wastepaper. Processes applying this deinking agent are found to offer a high level of performance from the standpoint of the overall brightness and low level of residual visible ink particle of papers prepared from the deinked pulp. In addition, the invention provides for low foaming and high biodegradability without adverse influence upon deinking performance and reclaimed paper product brightness.

The invention therefore relates to a process for the deinking of office wastepaper stocks which comprises:
a) converting the wastepaper to a pulp,
b) contacting the pulp with an aqueous medium of alkaline pH containing between 0.05 and 2.0 percent by weight, calculated on a dry weight basis of the pulp, of a deinking agent comprising a first component comprising at least one ethylene oxide adduct of an alcohol having in the range of from 8 to 20 carbon atoms and an average of from 3 to 20 oxyethylene units per molecule of alcohol, and a second component selected from the group consisting of one or more detergent-range olefins having from 8 to 22 carbon atoms, and
c) treating the resulting pulp-containing medium by washing or flotation to remove suspended ink therefrom.

The present invention is generally applicable to the deinking of the office wastepaper stocks, in particular those comprising xerographically printed, laser printed and/or ledger printed wastepaper, and also to practices and procedures conventionally employed for their processing. Generally, any such process comprises three principal steps: the first, a step to reduce the wastepaper feed to pulp, the second, a contact between the pulp and an alkaline aqueous medium containing the deinking agent to produce a suspension or dispersion of the ink, and, the third, a treatment of the resulting pulp containing medium to remove suspended or dispersed ink particles therefrom. The first two steps of the process, however, may be combined.

The present invention centers upon the composition and performance of the deinking agent. For purposes of the invention, the deinking agent has at least two components, with the first component being an ethoxylated detergent-range alcohol and the second component being selected from the group consisting of one or more detergent-range olefins. The components are typically blended together using conventional means prior to use in a deinking process.

The first component of the deinking agent is one or more oxyethylene adducts (or ethoxylates) of detergent-range alcohols having from 3 to 20 oxyethylene units per molecule of alcohol. Such alcohol ethoxylates are represented by the formula

R-O-(CH₂-CH₂O)ₙ-H (I)

wherein R is a straight-chain or branched-chain alkyl group having in the range of from 8 to 20 carbon atoms, preferably from 12 to 18 carbon atoms, or an alkylaryl group having an alkyl moiety having from 8 to 12 carbon atoms and n represents the average number of oxyethylene groups per molecule and is a number in the range of from 3 to 20, preferably in the range of from 3 to 13, and more preferably in the range of from 3 to 7. The alkyl group can have a carbon chain which is straight or branched. Preferably, about 80 percent of the R groups in the alcohol ethoxylates utilized in the instant invention are straight-chain. It is understood that R can be substituted with any substituent which is inert such as, for example, halogen groups. Ethoxylates within this class are conventionally prepared by the addition of ethylene oxide to the corresponding alcohol (ROH) in the presence of a catalyst.

The alcohol ethoxylate component of the deinking agent in the instant invention is preferably derived by ethoxylation of primary or secondary, straight-chain or branched alcohols. The most common ethoxylates in this class and the ones which are particularly useful in this invention are the primary alcohol ethoxylates, i.e., compounds of formula I in which R is an alkyl group and the -O-(CH₂-CH₂O)ₙ-H ether substituent is bound to a primary carbon of the alkyl group.

Alcohols which are suitable for ethoxylation to form the alcohol ethoxylate component of the deinking agent of the instant invention include coconut fatty alcohols, tallow fatty alcohols, and the commercially available synthetic long-chain fatty alcohol blends, e.g., the C₁₂ to C₁₅ alcohol blends available as NEODOL 25 Alcohol (a registered trademark of product manufactured and sold by Shell Chemical Company), the C₁₄ to C₁₅ alcohol blends available as NEODOL 45 Alcohol, the C₁₂ to C₁₄ alcohol blends available as Tergitol 24L (a registered trademark of product manufactured and sold by Union Carbide Corporation), and the C₁₂ to C₁₃ alcohol blends available, for example, as NEODOL 23 Alcohol (Shell).

Suitable alcohol ethoxylates can be prepared by adding to the alcohol or mixture of alcohols to be ethoxylated a calculated amount, e.g., from 0.1 to 0.6, preferably from 0.1 to 0.4 percent by weight, based on total alcohol, of a strong base, typically an alkali metal or alkaline earth metal hydroxide such as sodium hydroxide or potassium hydroxide, which serves as a catalyst for ethoxylation. The resulting mixture is dried, as by vapour phase removal of any water present, and an amount of ethylene oxide calculated to provide the desired number of moles of ethylene oxide per mole of alcohol is then introduced and the alcohol ethoxylate is allowed to react until the ethylene oxide is consumed, the course of the reaction being followed by the decrease in reactor pressure.

Preferred alcohol ethoxylate components for use in the deinking agents in the present invention include ethoxylated fatty alcohols, preferably linear primary alcohols with C₈ to C₂₀, preferably C₁₂ to C₁₅ alkyl groups, and an average of from 3 to 20, more preferably in the range of from 3 to 13, and most preferably in the range of from 3 to 7 moles of ethylene oxide per mole of alcohol.

A particularly preferred class of alcohol ethoxylates is represented by the condensation product of a fatty alcohol having from 12 to 15 carbon atoms and from 3 to 13 moles of ethylene oxide per mole of fatty alcohol. Suitable species of this class of ethoxylates include: the condensation product of C₁₂-C₁₅ oxo-alcohols and 3 moles of ethylene oxide; the condensation product of narrow cut C₁₄-C₁₅ oxo-alcohols and 7 moles of ethylene oxide per mole of fatty (oxo)alcohol; and the condensation of a narrow cut C₁₂-C₁₃ fatty (oxo)alcohol and 6.5 moles of ethylene oxide per mole of fatty alcohol. The fatty oxo-alcohols, while primarily linear, can have, depending upon the processing conditions and raw material olefins, a certain degree of branching.

The second component of the deinking agent is selected from the group consisting of one or more detergent-range olefins. The ratio of the first component to the second component is typically in the range of 10:1 to 1:1, preferably from 10:1 to 3:1, and more preferably from 9:1 to 3:1.

Olefins which are suitable for use as the second component in the deinking agents in the present invention are detergent-range olefins. These olefins can be alpha olefins or internal olefins and they may be linear or branched, but are preferably linear or lightly branched. Single cut olefins or mixtures of olefins may also be used. In a particularly preferred embodiment, the olefin is an alpha olefin containing from 12 to 18 carbon atoms.

Preferred olefins for use in the second component of the deinking agent are, for practical reasons of availability, the commercial olefin products in the C₈ to C₂₂ range. While commercial production of such olefins may be carried out by the cracking of paraffin wax, commercial production is more commonly accomplished by the oligomerization of ethylene using procedures well known in the art. The resulting oligomerization products are substantially of linear structure. Commercial olefin products manufactured by ethylene oligomerization are marketed in the United States by Chevron Corporation and Albermarle, and by Shell Chemical Company under the trademark NEODENE. Specific procedures for preparing suitable linear olefins from ethylene are described in U.S. Patent Nos. 3,676,523, 3,686,351, 3,737,475, 3,825,615 and 4,020,121. While most of such olefin products are comprised largely of alpha-olefins, higher linear internal olefins are also commercially produced, for example, by the chlorination-dehydrochlorination of paraffins, by paraffin dehydrogenation, and by isomerization of alpha-olefins. Linear internal olefin products in the C₈ to C₂₂ range are marketed by Shell Chemical Company and by Liquichemica Company. These commercial products, whether predominantly internal or alpha-olefins typically contain about 70 percent by weight or more, most often about 80 percent by weight or more, linear mono-olefins in a specified carbon number range (e.g., C₁₀ to C₁₂, C₁₁ to C₁₅, C₁₂ to C₁₃, C₁₅ to C₁₈, etc.), the remainder of the product being olefin of other carbon number or carbon structure, diolefins, paraffins, aromatics, and other impurities resulting from the synthesis process. Olefins in the C₁₂ to C₁₈ range are considered most preferred for use as the olefin component in the deinking agent in the present invention.

Other deinking agents may be present as a third component in addition to the alcohol ethoxylate and olefin deinking agent, such as, for example, alcohols, particularly detergent-range alcohols having 8 to 20 carbon atoms, propoxyethoxylates, glycols, fatty acids, fatty acid propoxyethoxylates and the like. Particularly good results have been obtained with glycols, such as, for example, hexylene glycol. However, detergent-range alcohols are preferred as third component.

The optional third component of the deinking agent of the present invention comprises one or more detergent-range alcohols having from 8 to 20 carbon atoms, preferably from 8 to 15 carbon atoms, and more preferably from 9 to 11 carbon atoms. Preferably, the alcohols have a carbon structure which is linear (straight chain) or only moderately branched. Predominantly linear alcohols are preferred for reasons relating to biodegradability in process effluents rather than to deinking performance. Similarly, primary alcohols are preferred, although the invention may be suitably practiced using secondary or tertiary alcohols.

Alcohols which are suitable as a third component in the deinking agent in the instant invention include coconut fatty alcohols, stearyl fatty alcohols, tallow fatty alcohols, and the commercially available synthetic long-chain fatty alcohol blends, e.g., the C₁₂ to C₁₅ alcohol blends available as NEODOL 25 Alcohol (a registered trademark of product manufactured and sold by Shell Chemical Company), the C₉ to C₁₁ alcohol blends available as NEODOL 91 Alcohol, the C₁₄ to C₁₅ alcohol blends available as NEODOL 45 Alcohol, the C₁₂ to C₁₄ alcohol blends available as Tergitol 24L (a registered trademark of product manufactured and sold by Union Carbide Corporation), and the C₁₂ to C₁₃ alcohol blends available, for example, as NEODOL 23 Alcohol (Shell).

In the present invention, the ratio of the first component (alcohol ethoxylate) to the second component (olefin) to the third component of the deinking agent is typically in the range of from 10:1:1 to 2:1:1, preferably in the range of from 8:1:1 to 7:3:3, most preferably 7.5:1:1.5.

The invention applies the deinking agent comprising a detergent-range alcohol ethoxylate component, a component selected from the group consisting of a detergent-range olefin, and optionally, a detergent-range alcohol component, to wastepaper which is necessarily in the form of a pulp, that is, to wastepaper which has first been substantially reduced to the individual fibers. Pulping is suitably conducted using any of the various conventional processes and equipment designed for this purpose. Most conveniently, the wastepaper process feedstock is treated in a device known as a "hydrapulper", which produces a slurry of the fibers in water having a pH of 8 to 12.

After the pulping step, the resulting fibers are contacted in an aqueous medium with the deinking agent. This contacting step may suitably be carried out in the pulping equipment, for example, by simply adding deinking agent and caustic to the aqueous slurry of the hydrapulper. This may be done either before or after addition of the wastepaper to the hydrapulper. Alternatively, the contact may be carried out using separate processing equipment such as for example, kneaders and dispergers, which provides for agitation of the aqueous pulp slurry. For the contact step, the solids content of the pulp is present in a quantity typically between 0.5 and 30.0 percent by weight, calculated as the dry weight of the wastepaper feed relative to total weight of the slurry formed. In a preferred embodiment, the slurry contains between 5 and 20 percent by weight paper fiber. The amount of deinking agent present in the slurry is between 0.05 and 2.0 percent by weight, calculated basis dry fiber weight. In a preferred embodiment, the quantity of deinking agent utilized is between 0.1 and 1.0 percent by weight, with between 0.2 and 0.5 percent by weight being particularly preferred.

During contact between the pulp fiber and the deinking agent, it is preferable that the aqueous contact medium be maintained at alkaline pH. A pH value greater than 7 is preferred, a pH between 7 and 13 is more preferred, and a pH between 8 and 10 is generally most preferred. The alkalinity is generally maintained by the addition of base such as, for example, caustic or sodium silicate, to the aqueous contact medium. Typically, the amount of base added to the contact medium is in the range of from 1 to 4 percent by weight calculated basis the dry weight of the pulp fiber.

In addition to water, pulp, base and deinking agent, the contact slurry may further contain other substances conventionally employed in deinking processes such as, for example, brighteners, solvents, antifoam agents, water softeners and the like. These substances, if present, along with additional deinking agents, if present, may be added to the pulper when the deinking agent comprising a detergent-range alcohol ethoxylate component and a detergent-range olefin, is added or they may be added to separate process equipment. However, neither the use of these substances nor the use of additional deinking agents is necessary.

Processing of the pulp slurry during contact with the deinking agent is preferably carried out at elevated temperatures, particularly temperatures in the range of from 30 °C to 95 °C. The invention has been found to be particularly effective at a temperature in the range of from 35 °C to 70 °C, while a temperature in the range of from 40 °C to 60 °C is considered especially preferred.

The contact time for the wastepaper pulp and the aqueous deinking medium is not critical for purposes of this invention. However, a contact time of greater than 10 minutes is preferred from the standpoint of deinking performance. For purposes of process efficiency, it is preferred that the contact time be in the range of from 15 minutes to one hour, and more preferred that the contact time be in the range of from 20 to 50 minutes.

Following the contact step between the pulp and the aqueous medium containing the deinking agent, the mixture is treated for separation between the pulp fibers and the ink particles which are both dispersed, or suspended, in the medium. Separation of one or the other from the medium is suitably carried out by techniques commonly applied in conventional deinking practices, including those treatments known in the art as washing and flotation. In washing, the ink particles are rinsed from the pulp by contact with a flow of water, usually a countercurrent flow relative to the pulp. Among the devices commercially used for washing and suitable for use in the practice of the present invention are the sidehill screen, the gravity decker or drum washer, the inclined screw extractor, the screw press, and the twin wire press. Centrifugal cleaners of various designs may also be used to separate the ink from the pulp. Flotation methods of ink isolation generally involve bubbling a stream of air or another gas through the pulp. The air bubbles rise to the surface and carry the ink particles with them thereby generating foam which can be separated. It will be understood that in addition to pulping, contact and ink removal steps described herein, the invention may be practiced using other process steps as are employed in wastepaper reclamation operations in general and office wastepaper in particular.

The invention will be illustrated below by the following examples.

### Example 1

This example illustrates the deinking of xerographically printed paper carried out using a deinking agent comprising a 3:1 ratio of NEODOL 25-3 (a mixture of C₁₂ to C₁₅ predominantly linear and primary alcohols, i.e., about 28 %wt. C₁₂, 30 %wt. C₁₃, 22 %wt. C₁₄ and 20 %wt. C₁₅, containing an average of 3 oxyethylene units per molecule) to NEODENE 10 (at least 97% C₁₀ and at least 96% normal alpha olefin). NEODOL and NEODENE are trademarks of Shell Oil Company.

To test the performance of the invention, the following procedures were carried out for the deinking of xerographically printed wastepaper.

Sample Preparation. Xerographically printed paper was aged at least three days and then shredded by hand and mixed well. Multiple copies of the same printed page were used.

Hydrapulping and Deinking. Deionized water was heated to 40-45 °C. Sodium hydroxide pentahydrate was added to adjust the pH to about 9. To this was added 0.5 grams of the deinking agent (0.25% weight calculated on the weight of the pulp). This was added as a 1% solution or dispersion in deionized water. A slurry of about 5% consistency was prepared by adding 20 grams of shredded xerographically printed paper. This slurry was mixed for 30 minutes in a Hamilton-Beach mixer on the high speed stir setting.

This slurry was separated into two equal portions. One portion of the slurry was made into sheets using Buchner funnel filtration. The other portion was subjected to flotation.

Flotation. Deionized water was heated to 40°-45 °C and 2.litres placed in a Denver Flotation Machine. This unit consists of a stir motor, an impeller shaft and stirrer blade and a container for the pulp slurry. As the slurry is stirred, air is drawn down the hollow stirrer shaft and exits at the stirrer blades through small holes. The air bubbles created in the fashion rise through the pulp slurry taking ink particles with them. The froth at the top of the container is removed to separate the ink particles from the pulp slurry.

The pulp slurry was added to the container and diluted to a total volume of 2.5 litres using additional 40°-45 °C tap water. Pulp slurry consistency was about 0.8% by weight. This mixture was stirred for 10 minutes at 900 revolutions per minute while slurry foam was skimmed off and collected.

The slurry was decanted from the flotation cell without pulp loss.

Paper Making. Deinking process performance was measured by making paper from the deinked pulp and analyzing the paper for brightness and visible ink particles. The standard of comparison for determining the percent of visible ink particle removed was the paper sheets made immediately after pulping. The pulp was divided into four portions so that at least three, and preferably four, handsheets each weighing 2-4 grams could be made. Each portion of pulp was dispensed in 40°-45 °C tap water and poured into a Buchner funnel fitted with Whatman Number 40 filter paper and placed in a vacuum flask connected to a house vacuum line.

In the Buchner funnel, pulp was deposited forming a wet sheet, through which water drained rapidly. The sheet thus formed was covered with two pieces of thick dry filter paper (two above and two below) and the several layers then squeezed by rolling with a 13.6 kg rolling pin. The layers were next removed from the apparatus and the prepared sheet separated from the filter papers. Finally, the prepared sheet was placed between four thick filter papers (two above and two below), pressed with a force of 445 kPa, and dried between fresh thick filter papers at room temperature in the dark for about 24 hours.

The papers ("Buchner funnel pads") thus prepared were analyzed for brightness. Brightness measurements were made on the basis of percent light reflection from the sheet, using a standardized Technidyne Technibrite ERIC 950 meter (Technidyne Technibrite is a Trademark). Eight measurements were made for each sheet, one at the center of each of four quadrants on both sides, and the eight values averaged for the sheet. Normally, the eight separate measurements varied over a range of no more than 1%. Reported brightness readings were the average of the brightness results for at least three similarly processed sheets.

The hand sheets were inspected for visible ink particles using an image analysis method. Images of the entire sheet were directly input into an Applied Vision Systems ASA 2000 Image Analyzer. The visible ink particle count (in parts per million) was determined for particles larger in area than 0.02 square millimetres.

The results of these tests are presented in Table I.

### Example 2

The procedures of Example 1 were repeated with the exception that the deinking agent used was a 3:1 ratio of NEODOL 25-3 (a mixture of C₁₂ to C₁₅ predominantly linear and primary alcohols, i.e., about 28 %wt. C₁₂, 30 %wt. C₁₃, 22 %wt. C₁₄ and 20 %wt. C₁₅, containing an average of 3 oxyethylene units per molecule) to NEODENE 14 (at least 95% C₁₄ and at least 94% normal alpha olefin).

The results are presented in Table I.

### Example 3

The procedures of Example 1 were repeated with the exception that the deinking agent used was a 9:1 ratio of NEODOL 25-3 (a mixture of C₁₂ to C₁₅ predominantly linear and primary alcohols, i.e., about 28 %wt. C₁₂, 30 %wt. C₁₃, 22 %wt. C₁₄ and 20 %wt. C₁₅, containing an average of 3 oxyethylene units per molecule) to NEODENE 14 (at least 92% C₁₄ and at least 94% normal alpha olefin).

The results are presented in Table I.

### Example 4

The procedures of Example 1 were repeated with the exception that the deinking agent used was a 3:1 ratio of NEODOL 25-3 (a mixture of C₁₂ to C₁₅ predominantly linear and primary alcohols, i.e., about 28 %wt. C₁₂, 30 %wt. C₁₃, 22 %wt. C₁₄ and 20 %wt. C₁₅, containing an average of 3 oxyethylene units per molecule) to NEODENE 16 (at least 92% C₁₆ and at least 94% normal alpha olefin).

The results are presented in Table I.

### Example 5

The procedures of Example 1 were repeated with the exception that the deinking agent used was a 3:1 ratio of NEODOL 25-3 (a mixture of C₁₂ to C₁₅ predominantly linear and primary alcohols, i.e., about 28 %wt. C₁₂, 30 %wt. C₁₃, 22 %wt. C₁₄ and 20 %wt. C₁₅, containing an average of 3 oxyethylene units per molecule) to NEODENE 2024 (at least 40% C₂₀, at least 38% C₂₂, at least 8% C₂₄, and at least 90% normal alpha olefin).

The results are presented in Table I.

### Example 6

The procedures of Example 1 were repeated with the exception that the deinking agent used was a 3:1 ratio of NEODOL 25-3 (a mixture of C₁₂ to C₁₅ predominantly linear and primary alcohols, i.e., about 28 %wt. C₁₂, 30 %wt. C₁₃, 22 %wt. C₁₄ and 20 %wt. C₁₅, containing an average of 3 oxyethylene units per molecule) to NEODENE 1518 internal olefin (at least 19% C₁₅, 27% C₁₆, 30% C₁₇ at least 21% C₁₈, and at least 14% carbon chain branching).

The results are presented in Table I.

### Comparative Example A

The procedures of Example 1 were repeated with the exception that no deinking agent was used.

The results are presented in Table I.

### Comparative Example B

The procedures of Example 1 were repeated with the exception that the deinking agent used was a 3:1 ratio of NEODOL 25-3 (a mixture of C₁₂ to C₁₅ predominantly linear and primary alcohols, i.e., about 28 %wt. C₁₂, 30 %wt. C₁₃, 22 %wt. C₁₄ and 20 %wt. C₁₅, containing an average of 3 oxyethylene units per molecule) to NEODOL 25 (a mixture of C₁₂ to C₁₅ predominantly linear and primary alcohols, i.e., about 28 %wt. C₁₂, 30 %wt. C₁₃, 22 %wt. C₁₄ and 20 %wt. C₁₅).

The results are presented in Table I.

### Comparative Example C

The procedures of Example 1 were repeated with the exception that the deinking agent used contained a NEODOL 1 (a mixture of C₁₀ predominantly linear and primary alcohol) alcohol component in place of the alcohol ethoxylate component.

The results are presented in Table I.

### Example 7

The procedures of Example 1 were repeated with the exception that the deinking agent used was a 3:1 ratio of NEODOL 45-7 (a mixture of C₁₄ to C₁₅ predominantly linear and primary alcohols, i.e., about 52 %wt. C₁₄ and 48 %wt. C₁₅, containing an average of 7 oxyethylene units per molecule) to NEODENE 16 (at least 92% C₁₆ and at least 94% normal alpha olefin).

The results are presented in Table I.

### Example 8

The procedures of Example 1 were repeated with the exception that the deinking agent used was a 6:2:2 ratio of NEODOL 45-7 (a mixture of C₁₄ to C₁₅ predominantly linear and primary alcohols, i.e., about 52 %wt. C₁₄ and 48 %wt. C₁₅, containing an average of 7 oxyethylene units per molecule) to NEODENE 16 (at least 92% C₁₆ and at least 94% normal alpha olefin) to hexylene glycol.

The results are presented in Table I.

### Example 9

The procedures of Example 1 were repeated with the exception that the deinking agent used was a 4:4:2 ratio of NEODOL 45-7 (a mixture of C₁₄ to C₁₅ predominantly linear and primary alcohols, i.e., about 52 %wt. C₁₄ and 48 %wt. C₁₅, containing an average of 7 oxyethylene units per molecule) to NEODENE 14 (at least 95% C₁₄ and at least 94% normal alpha olefin) to hexylene glycol.

The results are presented in Table I.

### Comparative Example D

The procedures of Example 9 were repeated with the exception that the deinking agent contained a NEODOL 45 alcohol component in place of the NEODENE 14 olefin component.

The results are presented in Table I.

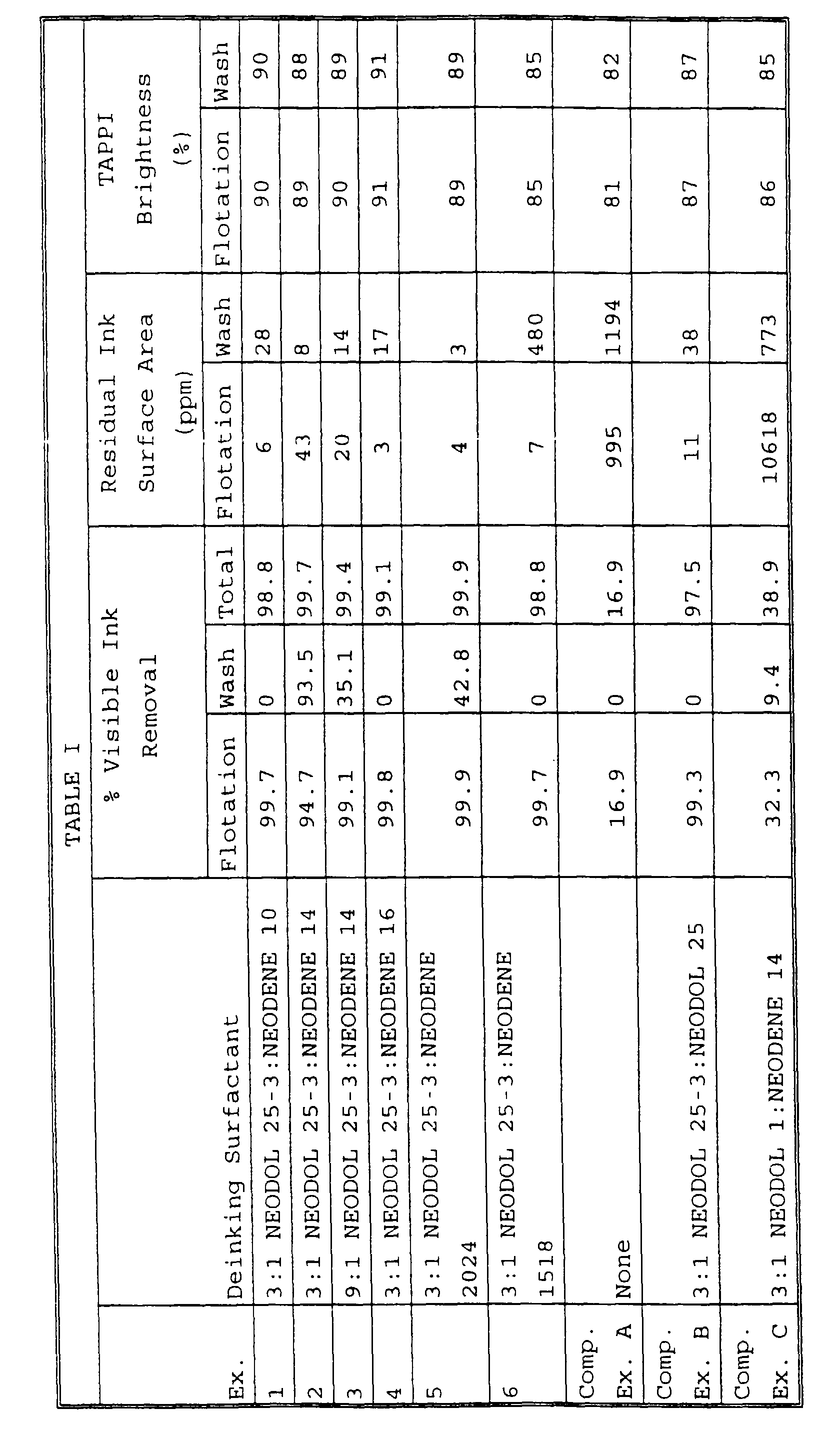

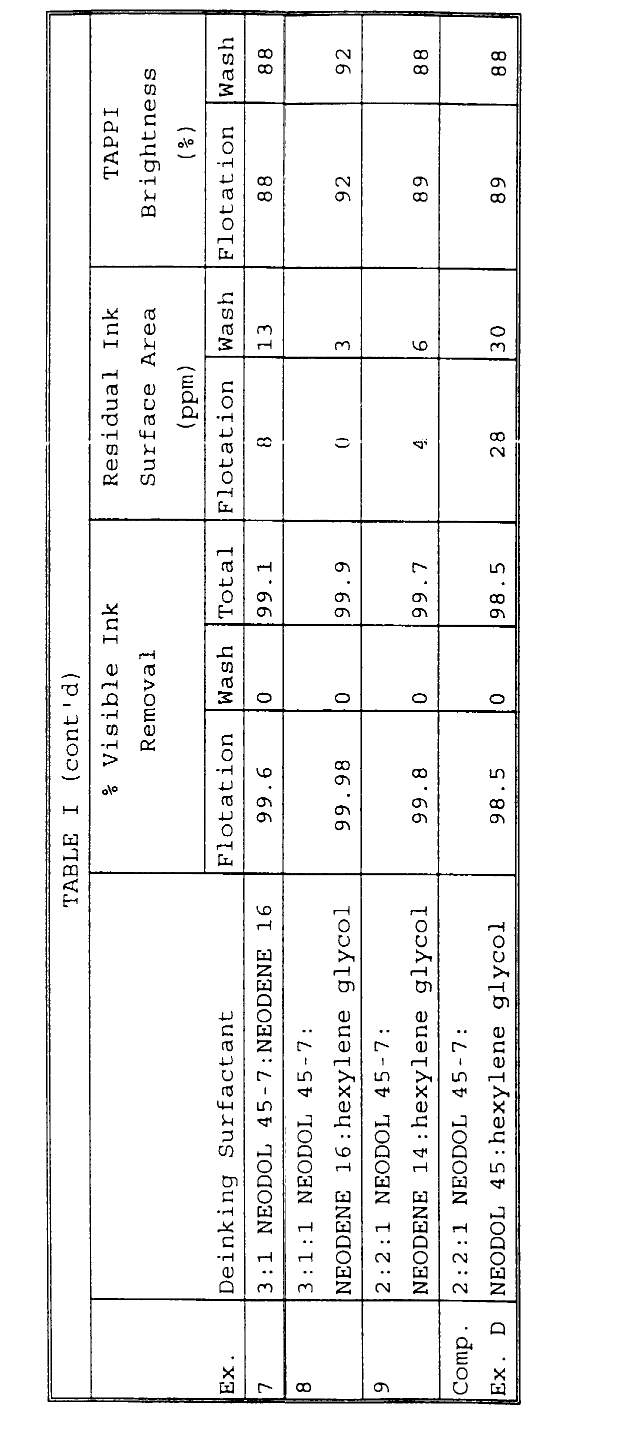

### Discussion of the Results of Examples 1-9 and Comparative Examples A-D

As can be seen in Table I, 3:1 blends of NEODOL 25-3 and NEODENE alpha-olefins (Examples 1-5) provided very high visible ink particle removal after sequential flotation - wash deinking. With the exception of entry 2, ink removal efficiency in the flotation step was greater than 99%. The high brightness values indicate that few microscopic ink particles remain. (The significant economic advantage compared to other electrostatic ink deinking agents (Comparative Example B) is that significantly less bleaching agent would be required to increase pulp brightness to a target value. Examples 1-5 indicate that 3:1 NEODOL 25-3 blends with alpha-olefins having carbon numbers from 10 to 20-24 were highly effective in removing visible ink particles while producing a high brightness pulp.

In some examples, additional ink was removed in the post flotation washing step. Why this occurred in some examples and not others is not presently understood. The losses of fiber and filler particles in the washing step may account for the increased residual ink content after washing compared to after flotation.

Deinked pulp residual ink surface area of 5 ppm or less is considered more than adequate to use the pulp in making high value printing and writing paper. Deinked pulp residual ink surface area of 50 ppm or less is considered adequate to produce tissue products from the pulp. The residual ink surface area obtained in entries 4 and 5 indicate this deinked pulp can be used to produce high value printing and writing paper. The deinked pulp produced in the other tests can be used to produce tissue products.

In Example 6 of Table, I, an internal olefin, IO 1518, was used instead of an alpha-olefin in a 3:1 blend with NEODOL 25-3. Results indicate a very high flotation efficiency in removing visible ink particles. No additional visible ink particles were removed in the subsequent washing step. The brightness values in Example 6 were significantly less than obtained in Examples 1-5 using alpha-olefins in the deinking agent. This indicates that 3:1 blends of NEODOL 25-3 and the internal olefin IO 1518 were less effective in providing high brightness deinked pulp. Compared to Examples 1-5, more bleaching agent would be needed to provide a given target brightness value.

No deinking agent was in Comparative Example A. Not surprisingly, residual ink surface area was much higher and ink removal efficiency was lower than in Examples 1-6. Brightness was also significantly lower in the absence of a deinking agent.

In Comparative Example B, the highly effective deinking agent was taken from U.S. Patent 4,561,933. A predominantly linear alcohol, NEODOL 25 was substituted for the alpha-olefins used in Examples 1-5. Deinking agents of this type used in Comparative Example B are used commercially to deink office waste paper containing paper printed with electrostatic inks. Comparative Example B indicates that flotation ink removal was quite high, comparable to that obtained in Examples 1-5. However, deinked pulp brightness was significantly lower than obtained in Examples 1-5. This indicates more microscopic ink particles remain in the Comparative Example B pulp. Higher levels of costly bleaching agents would be required to attain a target brightness with the Comparative Example B deinked pulp than with the deinked pulp of Examples 1-5. Thus, the presence of the alpha-olefin results in economic advantages associated with reduced bleaching costs.

In Comparative Example C, a predominantly linear and primary alcohol (NEODOL 1) was used instead of a predominantly linear and primary alcohol ethoxylate. Comparison to Example 2 which used the same alpha-olefin, NEODENE 14, indicated much lower ink removal efficiency and consequently a much higher residual ink surface area were obtained in Comparative Example C. Comparison of these examples indicates that, for high effectiveness, the alcohol ethoxylate is a required component of the deinking agent.

In Example 7, a water soluble alcohol ethoxylate was used instead of the oil soluble NEODOL 25-3 used in Example 4. Very high ink removal efficiency was obtained and the residual ink surface area was more than adequate for the deinked pulp to be used in the manufacture of tissue products. The residual ink surface area suggests that, with a modest amount of additional processing, residual ink content could be reduced enough to manufacture high value printing and writing grade paper from the pulp. The Example 7 deinked pulp brightness value, while significantly less than obtained in Example 4, was still quite high.

Hexylene glycol is an additive that may be used to both improve product liquidity at low temperatures and, as comparison of Example 8 and Example 7 indicate, to increase ink removal efficiency. In Example 8, 1 part of hexylene glycol was added to the 3:1 blend of NEODOL 45-7 and NEODENE 16 used in Example 7. In Example 8, no visible ink particles could be detected after flotation. The residual ink particle surface area permits this deinked pulp to be used to manufacture high value printing and writing paper. The deinked sheet brightness is equivalent to that of the unprinted paper, indicating that virtually no pulp bleaching would be required. The high brightness value suggests that little, if any, microscopic ink particles are present in the deinked pulp. The increase in performance over Example 7, particularly increased brightness, could be attributed to the presence of the hexylene glycol in the deinking agent.

In Example 8 and Example 9, the hexylene glycol comprises 20% of the deinking agent. However, the ratio of NEODOL 45-7:NEODENE olefin was changed from 3:1 to 1:1. In addition, the NEODENE olefin was changed from NEODENE 16 in Example 8 to NEODENE 14 in Example 9. Visible ink particle removal remained excellent despite those changes. The residual ink surface area after flotation was low enough in Example 9 for this pulp to be used to produce high value printing and writing paper. However, the Example 9 brightness level, while quite high, was significantly less than obtained in Example 8. Comparison of Examples 8 and 9 suggests that the right amount of alpha-olefin and the alpha-olefin carbon number are both important in maximizing brightness when using deinking agents containing alcohol ethoxylate, alpha-olefin and hexylene glycol.

In Comparative Example D, a predominantly linear alcohol, NEODOL 45, was used instead of the alpha-olefin used in Example 9. Comparison of the two examples indicates that omission of the alpha-olefin from the deinking agent composition reduced visible ink particle removal efficiency. Unlike the deinked pulp after the Example 9 flotation, the Comparative Example D pulp could not be used to manufacture high value printing and writing paper although pulp quality was adequate to manufacture tissue product. The comparison of Example 9 and Comparative Example D indicates that the alpha-olefin is a required component of the deinking agent for maximum removal of visible ink particles to be achieved.

### Example 10

This example illustrates the deinking of a 50:50 mixture of xerographically printed and ledger printed paper carried out using a deinking agent comprising a 7.5:1:1.5 ratio of NEODOL 45-7 (a mixture of C₁₄ to C₁₅ predominantly linear and primary alcohols, about 52 %wt. C₁₄ and 48 %wt. C₁₅, containing an average of 7 oxyethylene units per molecule) to NEODENE 14 (at least 95% C₁₄ and at least 94% normal alpha olefin) to NEODOL 45 (a mixture of C₁₄ to C₁₅ predominantly linear and primary alcohols, about 52 %wt. C₁₄ and 48 %wt. C₁₅).

To test the performance of the invention, the following procedures were carried out for the deinking of mixed xerographically printed and laser printed wastepaper.

Sample Preparation. Mixed xerographically printed and laser printed paper was aged at least three days and then shredded by hand and mixed well. Multiple copies of the same printed page were used.

Hydrapulping and Deinking. Deionized water was heated to 40-45 °C. Sodium hydroxide pentahydrate was added to adjust the pH to about 9. To this was added 0.75 millilitres of the deinking agent (0.25% weight calculated on the weight of the pulp). A slurry of about 12% consistency was prepared by adding 150 grams of shredded xerographically printed paper and 150 grams of shredded ledger printed paper. This slurry was mixed for 30 minutes in an Adirondack, Formax 450 pulper on the high speed stir setting.

This slurry was separated into two equal portions. One portion of the slurry was made into sheets using Buchner funnel filtration. The other portion was subjected to flotation.

Flotation. Deionized water was heated to 40-45 °C and 2 litres placed in a Denver Flotation Machine. This unit consists of a stir motor, an impeller shaft and stirrer blade and a container for the pulp slurry. As the slurry is stirred, air is drawn down the hollow stirrer shaft and exits at the stirrer blades through small holes. The air bubbles created in the fashion rise through the pulp slurry taking ink particles with them. The froth at the top of the container is removed to separate the ink particles from the pulp slurry.

The pulp slurry was added to the container and diluted to a total volume of 2.5 litres using additional 40°-45 °C tap water. Pulp slurry consistency was about 1.0% by weight. This mixture was stirred for 3 minutes at 1200 revolutions per minute while slurry foam was skimmed off and collected.

The slurry was decanted from the flotation cell without pulp loss.

Paper Making. Deinking process performance was measured by making paper from the deinked pulp and analyzing the paper for brightness and visible ink particles. The standard of comparison for determining the percent of visible ink particle removed was the paper sheets made immediately after pulping. The pulp was divided into four portions so that at least three, and preferably four, handsheets each weighing 2-4 grams could be made. Each portion of pulp was dispensed in 40°-45 °C tap water and poured into a Buchner funnel fitted with Whatman Number 40 filter paper and placed in a vacuum flask connected to a house vacuum line.

In the Buchner funnel, pulp was deposited forming a wet sheet, through which water drained rapidly. The sheet thus formed was covered with two pieces of thick dry filter paper (two above and two below) and the several layers then squeezed by rolling with a 13.6 kg rolling pin. The layers were next removed from the apparatus and the prepared sheet separated from the filter papers. Finally, the prepared sheet was placed between four thick filter papers (two above and two below), pressed with a force of 445 kPa, and dried between fresh thick filter papers at room temperature in the dark for about 24 hours.

The papers ("Buchner funnel pads") thus prepared were analyzed for brightness. Brightness measurements were made on the basis of percent light reflection from the sheet, using a standardized Technidyne Technibrite ERIC 950 meter. Eight measurements were made for each sheet, one at the center of each of four quadrants on both sides, and the eight values averaged for the sheet. Normally, the eight separate measurements varied over a range of no more than 1%. Reported brightness readings were the average of the brightness results for at least three similarly processed sheets.

The hand sheets were inspected for visible ink particles using an image analysis method. Images of the entire sheet were directly input into an Applied Vision Systems ASA 2000 Image Analyzer. The visible ink particle count (in parts per million) was determined for particles larger in area than 0.02 square millimetres.

The results of these tests are presented in Table II.

### Example 11

The procedures of Example 10 were repeated with the exception that the deinking agent used was a 8:1:1 ratio of NEODOL 45-7 (a mixture of C₁₄ to C₁₅ predominantly linear and primary alcohols, about 52 %wt. C₁₄ and 48 %wt. C₁₅ containing an average of 7 oxyethylene units per molecule) to NEODENE 14 (at least 95% C₁₄ and at least 94% normal alpha olefin) to NEODOL 45 (a mixture of C₁₄ to C₁₅ predominantly linear and primary alcohols, about 52 %wt. C₁₄ and 48 %wt. C₁₅).

The results are presented in Table II.

### Example 12

The procedures of Example 10 were repeated with the exception that the deinking agent used was a 7:2:1 ratio of NEODOL 45-7 (a mixture of C₁₄ to C₁₅ predominantly linear and primary alcohols, about 52 %wt. C₁₄ and 48 %wt. C₁₅ containing an average of 7 oxyethylene units per molecule) to NEODENE 14 (at least 95% C₁₄ and at least 94% normal alpha olefin) to NEODOL 45 (a mixture of C₁₄ to C₁₅ predominantly linear and primary alcohols, about 52 %wt. C₁₄ and 48 %wt. C₁₅).

The results are presented in Table II.

### Example 13

The procedures of Example 10 were repeated with the exception that the deinking agent used was a 5.1:1.0:0.7:0.8 ratio of NEODOL 45-7 (a mixture of C₁₄ to C₁₅ predominantly linear and primary alcohols, about 52 %wt. C₁₄ and 48 %wt. C₁₅ containing an average of 7 oxyethylene units per molecule) to NEODENE 14 (at least 95% C₁₄ and at least 94% normal alpha olefin) to NEODOL 45 (a mixture of C₁₄ to C₁₅ predominantly linear and primary alcohols, about 52 %wt. C₁₄ and 48 %wt. C₁₅) to hexylene glycol.

The results are presented in Table II.

### Comparative Example E

The procedures of Example 10 were repeated with the exception that no deinking agent was used.

The results are presented in Table II.

### Comparative Example F

The procedures of Example 10 were repeated with the exception that the deinking agent used was a 3:1 ratio of NEODOL 45-7 (a mixture of C₁₄ to C₁₅ predominantly linear and primary alcohols, about 52 %wt. C₁₄ and 48 %wt. C₁₅ containing an average of 7 oxyethylene units per molecule) to NEODOL 45 (a mixture of C₁₄ to C₁₅ predominantly linear and primary alcohols, about 52 %wt. C₁₄ and 48 %wt. C₁₅).

The results are presented in Table II.

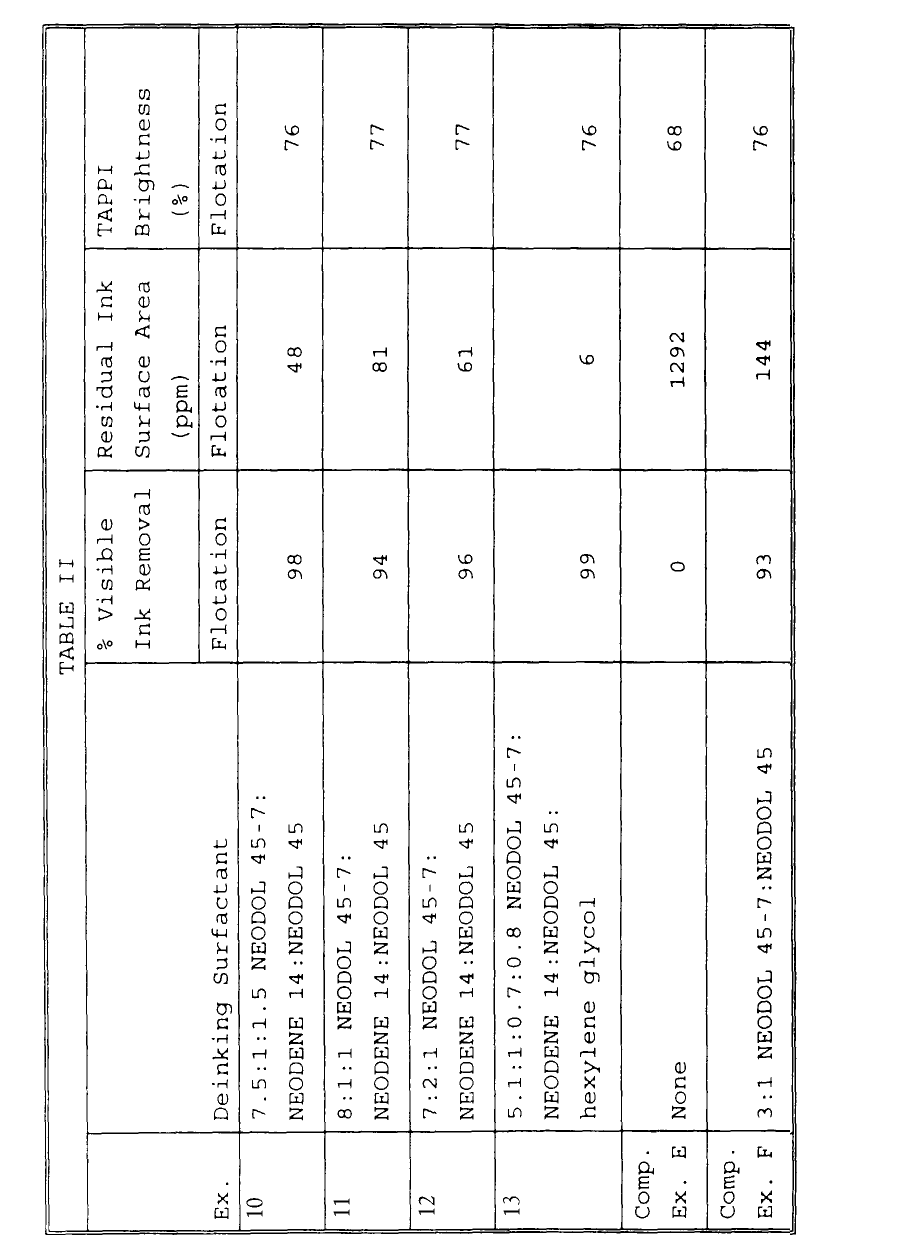

### Discussion of the Results of Examples 10-13 and Comparative Examples E-F

As can be seen in Table II, ternary blends of NEODOL 45-7, NEODENE 14 and NEODOL 45 provided very high visible ink particle removal after flotation. Examples 10, 11, and 12 indicate that these ternary blends are highly effective in removing visible ink particles while producing a high brightness pulp. A ternary blend with ratio 7.5:1,0:1.5, NEODOL 45-7; NEODENE 14:NEODOL 45 (Example 10) was found to be optimum for removing visible ink. Deinked pulp residual ink surface was also lower for ternary systems versus binary systems.

No deinking agent was used in Comparative Example E. Not surprisingly, residual ink surfactant was much higher and no visible ink was removed. Brightness was also significantly lower in the absence of a deinking agent.

Hexylene glycol was added to increase liquidity and stability of formula at lower temperatures and to increase ink removal efficiency. Hexylene glycol was added to a deinking agent containing the optimum ratio for surfactant system (7.5:1.0.0:1.5, NEODENE 14; NEODOL 45). In Example 13, 2.8 parts of hexylene was added to 6.8 parts of Example 10. Example 13 gave an equal visible ink removal equal to optimum system (Example 10), but showed a significant improvement in residual ink surface area.

In Comparative Example F, a binary system with 3:1 NEODOL 45-7 and NEODOL 45 was used. Brightness obtained with this system was comparable to brightness obtained with ternary systems. The visible ink removal for this system was significantly lower than the ternary systems of Example 10 and Example 12. Also, the residual ink surface area obtained with Comparative Example F was much higher than that obtained with ternary systems.

The comparison of Example 10, Example 12, and Example 13 with Comparative Example F shows improved removal of visible ink particles.

## Claims

1. A process for the deinking of office wastepaper stocks which comprises:
a) converting the wastepaper to a pulp,
b) contacting the pulp with an aqueous medium of alkaline pH containing between 0.05 and 2 percent by weight, calculated on a dry weight basis of the pulp, of a deinking agent comprising a first component comprising at least one ethylene oxide adduct of an alcohol having in the range of from 8 to 20 carbon atoms and an average of from 3 to 20 oxyethylene units per molecule of alcohol, and a second component selected from the group consisting of one or more olefins having from 8 to 22 carbon atoms, and
c) treating the resulting pulp-containing medium by washing or flotation to remove suspended ink therefrom.

2. The process of claim 1 wherein said first component is an ethylene oxide adduct of an alcohol having from 12 to 18 carbon atoms and an average of from 3 to 13 oxyethylene units per molecule of alcohol.

3. The process of claim 1 wherein said second component is selected from the group consisting of one or more olefins having from 12 to 18 carbon atoms.

4. The process of claim 3 wherein said second component is an olefin having from 12 to 18 carbon atoms.

5. The process of claim 1 wherein said deinking agent has a ratio of first component to second component in the range of from 10:1 to 1:1.

6. The process of claim 1 wherein the aqueous medium contains between 0.5 and 30 percent by weight of pulp and step b) of the process is carried out at a temperature in the range of from 30 °C to 95 °C.

7. The process of claim 1 wherein the aqueous medium of alkaline pH has a pH in the range of from 8 to 10.

8. The process of claim 1 wherein in step b) said deinking agent is added in a quantity between 0.1 to 1.0 percent by weight.

9. The process of claim 1 wherein said deinking agent additionally contains a third component selected from the group consisting of alcohols, propoxyethoxylates, glycols, fatty acids and fatty acid propoxyethoxylates having from 8 to 20 carbon atoms, and mixtures thereof.

10. The process of claim 9 wherein said third component is an alcohol having from 8 to 20 carbon atoms.

11. The process of claim 9 or 10 wherein said deinking agent has a ratio of first:second:third component in the range of from 10:1:1 to 2:1:1.

## Patentansprüche

1. Verfahren zum Deinken von Büro-Altpapier, welches Verfahren umfaßt:
a) Überführen des Altpapiers in eine Pulpe,
b) Inkontaktbringen der Pulpe mit einem wässrigen Medium mit alkalischem pH-Wert, das zwischen 0,05 und 2,0 Gew.-%, berechnet auf eine Trockengewichtsbasis der Pulpe, eines Deinking-Mittels enthält, das eine erste Komponente, umfassend wenigstens ein Ethylenoxidaddukt eines Alkohols mit von 8 bis 20 Kohlenstoffatomen und mit durchschnittlich 3 bis 20 Oxyethyleneinheiten pro Molekül Alkohol, und eine zweite Komponente umfaßt, ausgewählt aus der aus einem oder aus mehreren Olefinen mit 8 bis 22 Kohlenstoffatomen bestehenden Gruppe, und
c) Behandeln des resultierenden pulpehältigen Mediums durch Waschen oder Flotation zum Abtrennen von suspendierten Druckfarben daraus.

2. Verfahren nach Anspruch 1, worin die erste Komponente ein Ethylenoxidaddukt eines Alkohols mit 12 bis 18 Kohlenstoffatomen und im Durchschnitt 3 bis 13 Oxyethyleneinheiten pro Molekül Alkohol ist.

3. Verfahren nach Anspruch 1, worin die zweite Komponente aus der aus einem oder aus mehreren Olefinen mit 12 bis 18 Kohlenstoffatomen bestehenden Gruppe ausgewählt ist.

4. Verfahren nach Anspruch 3, worin die zweite Komponente ein Olefin mit 12 bis 18 Kohlenstoffatomen ist.

5. Verfahren nach Anspruch 1, worin das Deinking-Mittel ein Verhältnis von erster Komponente zu zweiter Komponente im Bereich von 10:1 bis 1:1 aufweist.

6. Verfahren nach Anspruch 1, worin das wässrige Medium 0,5 bis 30 Gew.-% Pulpe enthält und die Stufe b) bei einer Temperatur im Bereich von 30°C bis 95°C ausgeführt wird.

7. Verfahren nach Anspruch 1, worin das wässrige Medium mit alkalischem pH-Wert einen pH im Bereich von 8 bis 10 aufweist.

8. Verfahren nach Anspruch 1, worin in Stufe b) das Deinking-Mittel in einer Menge von 0,1 bis 1,0 Gew.-% zugesetzt wird.

9. Verfahren nach Anspruch 1, worin das Deinking-Mittel zusätzlich eine dritte Komponente, ausgewählt aus der aus Alkoholen, Propoxyethoxylaten, Glycolen, Fettsäuren und Fettsäurepropoxyethoxylaten mit 8 bis 20 Kohlenstoffatomen und Gemischen hievon bestehenden Gruppe, enthält.

10. Verfahren nach Anspruch 9, worin die dritte Komponente ein Alkohol mit 8 bis 20 Kohlenstoffatomen ist.

11. Verfahren nach Anspruch 9 oder 10, worin das Deinking-Mittel ein Verhältnis von erster:zweiter:dritter Komponente im Bereich von 10:1:1 bis 2:1:1 aufweist.

## Revendications

1. Procédé de désencrage de stocks de déchets de papier de bureau qui comprend :
a) la conversion des déchets de papier en une pâte,
b) la mise en contact de la pâte avec un milieu aqueux de pH alcalin contenant entre 0,05 et 2,0 % en poids, calculés sur une base pondérale sèche de la pâte, d'un agent de désencrage comprenant un premier composant comprenant au moins un produit d'addition d'oxyde d'éthylène et d'un alcool comportant de 8 à 20 atomes de carbone et une moyenne de 3 à 20 unités d'oxyéthylène par molécule d'alcool, et un second composant choisi dans le groupe comprenant une ou plusieurs oléfines comportant de 8 à 22 atomes de carbone, et
c) le traitement du milieu contenant la pâte résultant par lavage ou flottation pour en séparer l'encre en suspension.

2. Procédé suivant la revendication 1, dans lequel le premier composant est un produit d'addition d'oxyde d'éthylène et d'un alcool comportant de 12 à 18 atomes de carbone et une moyenne de 3 à 13 unités oxyéthylène par molécule d'alcool.

3. Procédé suivant la revendication 1, dans lequel le second composant est choisi dans le groupe comprenant une ou plusieurs oléfines comportant de 12 à 18 atomes de carbone.

4. Procédé suivant la revendication 3, dans lequel le second composant est une oléfine comportant de 12 à 18 atomes de carbone.

5. Procédé suivant la revendication 1, dans lequel l'agent de désencrage précité a un rapport du premier composant au second composant allant de 10/1 à 1/1.

6. Procédé suivant la revendication 1, dans lequel le milieu aqueux contient entre 0,5 et 30 % en poids de pâte et l'étape b) du procédé est réalisée à une température allant de 30°C à 95°C.

7. Procédé suivant la revendication 1, dans lequel le milieu aqueux de pH alcalin a un pH allant de 8 à 10.

8. Procédé suivant la revendication 1, dans lequel dans l'étape b) l'agent de désencrage est ajouté en une quantité entre 0,1 et 1,0 % en poids.

9. Procédé suivant la revendication 1, dans lequel l'agent de désencrage contient de plus un troisième composant choisi dans le groupe comprenant les alcools, les propoxyéthoxylats, les glycols, les acides gras et les propoxyéthoxylats d'acide gras comportant de 8 à 20 atomes de carbone et leurs mélanges.

10. Procédé suivant la revendication 9, dans lequel le troisième composant est un alcool comportant de 8 à 20 atomes de carbone.

11. Procédé suivant l'une ou l'autre des revendications 9 et 10, dans lequel l'agent de désencrage a un rapport du premier/second/ troisième composant allant de 10/1/1 à 2/1/1.
